# EUROPEAN PATENT SPECIFICATION

(11) **EP 4 308 039 B1**
(45) Date of publication and mention of the grant of the patent: **24.09.2025**
(21) Application number: 22770698.3
(22) Date of filing: 02.03.2022
(51) Int. Cl.: A61C 19/00, A61C 19/02, A61C 19/06, B29B 13/02, A61C 5/00

(54) **WARMER FOR DENTAL MATERIALS**
WÄRMER FÜR DENTALMATERIALIEN
CHAUFFAGE POUR MATÉRIAUX DENTAIRES

(30) Priority: 19.03.2021 US 202163200634 P
(43) Date of publication of application: 24.01.2024
(73) Proprietor: Solventum Intellectual Properties Company, Maplewood, MN 55144 (US)
(72) Inventor: GERLACH, Korbinian, 82229 Seefeld (DE); SCHLOSSER, Günther H., 82229 Seefeld (DE); WELKER, Stefan K., 82229 Seefeld (DE)
(74) Representative: Vossius & Partner Patentanwälte Rechtsanwälte mbB
(86) International application number: PCT/IB2022/051847
(87) International publication number: WO 2022/195391

(56) References cited:
- DE-A1- 3 010 475
- KR-A- 20160 089 757
- US-A- 3 089 939
- US-A- 3 875 370
- US-A- 4 198 559
- US-A- 5 139 188
- US-A- 5 377 823
- US-A- 5 749 730
- US-B1- 7 326 884
- US-B1- 7 326 884

## Description

### FIELD

The present disclosure generally relates to devices for warming dental materials.

### BACKGROUND

Warming devices have been described in, for example, US 6,312,254, US 6,236,020, US 7,015,423, US 6,616,448, US 4,198,559, US 7,326,884, DE 30 10 475 A1, US 3,089,939 and KR 2016 0089757 A.

### BRIEF DESCRIPTION OF THE DRAWINGS

**FIG. 1** illustrates a perspective view of a warming device in accordance with some embodiments of the present disclosure.
**FIG. 2** illustrates a perspective view of a warming device in accordance with some embodiments of the present disclosure.
**FIG. 3** illustrates an exploded perspective view of a warming device in accordance with some embodiments of the present disclosure.
**FIG. 4** illustrates a cross-sectional side view of a warming device according to some embodiments of the present disclosure.
**FIG. 5** illustrates an exploded perspective view of a warming device in accordance with some embodiments of the present disclosure.
**FIG. 6** illustrates a cross-sectional side view of a warming device according to some embodiments of the present disclosure.

### DETAILED DESCRIPTION

The present invention relates to a warming device for a dental material according to claim 1.

Dental materials, in particular dental composite materials for filling cavities in a patient's teeth, are often provided in a package (e.g., syringe or capsule) that allows for storing an amount of dental material, and also for dispensing the dental material from the package directly to a desired location. Although the dental materials are typically formulated to exhibit properties allowing for appropriate handling in many situations, to achieve optimal workability or performance of such dental materials it is often necessary to warm the material prior to introducing into the tooth.

To achieve warming, often times a metal block, which has a multiple of the heat capacity compared to a dental material package (e.g., capsule or syringe), is heated to a desired temperature (e.g., 55°C - 68°C), and the package is positioned on the plate. Such a process has several drawbacks. For example, only certain types of packaging are approved for exposure to elevated temperature levels. Additionally, such processes can result in degradation of the dental material that is delivered in multidose packages. That is, if the dental material is heated too often or for too long, it can degrade and no longer have its desirable material properties after curing (which can manifest itself, for example, in tooth fillings prone to chipping). Consequently, devices and methods for quickly and efficiently warming dental materials, and that do not result in degradation of the dental materials, are desirable.

As used herein:
The term "room temperature" refers to a temperature of 22°C to 25°C.

Infrared light is defined by light that exhibits a wavelength within a wavelength range of between 800 nm to 1500 nm. In particular, infrared light may be light that exhibits a wavelength of about 940 nm.

The term "substantially", unless otherwise specifically defined, means to a high degree of approximation (e.g., within +/- 10% for quantifiable properties) but again without requiring absolute precision or a perfect match.

Repeated use of reference characters in the specification is intended to represent the same or analogous features or elements of the disclosure. As used herein, the word "between", as applied to numerical ranges, includes the endpoints of the ranges, unless otherwise specified. The recitation of numerical ranges by endpoints includes all numbers within that range (e.g. 1 to 5 includes 1, 1.5, 2, 2.75, 3, 3.80, 4, and 5) and any range within that range.

All scientific and technical terms used herein have meanings commonly used in the art unless otherwise specified. The definitions provided herein are to facilitate understanding of certain terms used frequently herein and are not meant to limit the scope of the present disclosure. As used in this specification and the appended claims, the singular forms "a", "an", and "the" encompass embodiments having plural referents, unless the context clearly dictates otherwise. As used in this specification and the appended claims, the term "or" is generally employed in its sense including "and/or" unless the context clearly dictates otherwise.

In some embodiments, the present disclosure provides a warming device that facilitates convenient, quick, and efficient warming of dental materials and does not contribute to degradation of the dental materials. Generally, the warming device may be configured as a handheld or tabletop device (i.e., a device sized and shaped for being disposed in the practitioner's hand or on a table (e.g., the practitioner's procedure table)) while the device is used. The warming device is further configured for heating a dental material, such as a dental composite filling material. Such a dental composite filling material typically contains a flowable matrix material that is provided with fillers and additives. The matrix material is typically flowable so that it can be used for filling a cavity in a tooth to be restored, for example. The matrix material further is typically hardenable, in particular light hardenable by exposing it to visible blue light. Thus, the dental composite material can be shaped into the tooth cavity and can be hardened once it is in place. Typical dental composites include those based on methacrylate. By heating, the viscosity of the dental material can be reduced so that it can be shaped more easily and accurately within a cavity.

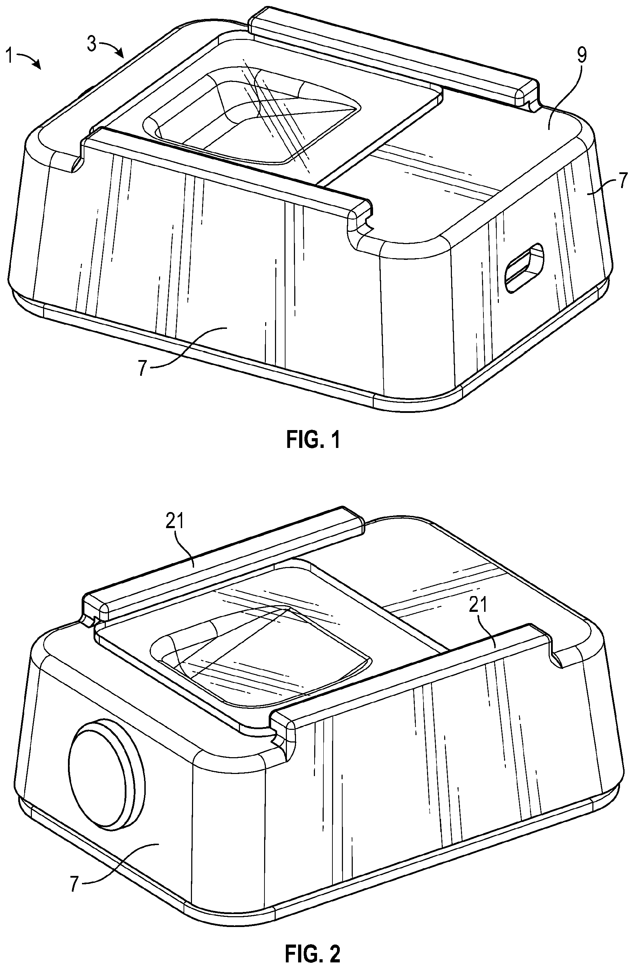

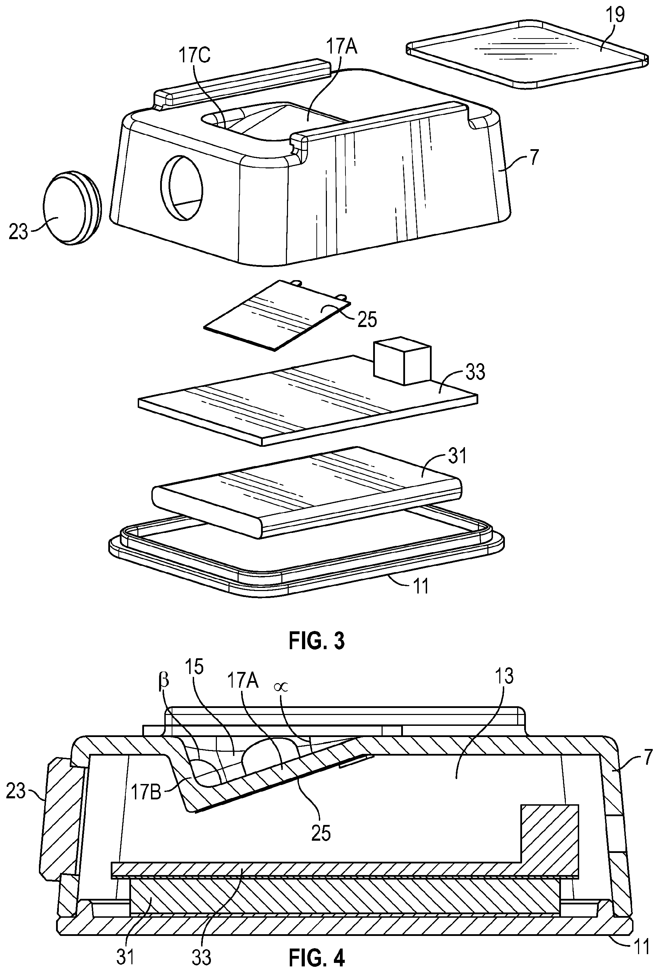

Referring now to FIGS. 1-4, a warming device 1 in accordance with some embodiments of the present disclosure is depicted. As shown the warming device 1 may include a housing 3 having one or more sidewalls 7, a top wall 9, and a bottom wall 11. While FIGS. 1-4 depict a housing that includes four sidewalls 7, it is to be appreciated that any number of sidewalls (including only one sidewall 7) may be employed. Further, it is to be appreciated that any combination of the sidewalls 7, top wall 9, and bottom wall 11 may be integrally formed or formed as separate components that are joined by a suitable coupling mechanism.

In some embodiments, the housing 3 may be hollow (or substantially hollow). In this regard, the housing 3 may define an internal cavity 13 in which various components (e.g., electrical components) of the warming device 1 may be housed.

In some embodiments, a dental material warming cavity 15 may be formed in the top wall 9 of the housing 3. Generally, the warming cavity 15 may be defined by an inclined wall 17A that extends down relative to the top wall (or a plane that is generally parallel to the plane of the top wall 9), a backwall 17B, and one or more sidewalls 17C. Generally, the inclined wall 17A and the backwall 17B may operate to facilitate easy removal of the warmed dental material from the warming cavity 15. Specifically, once warmed, the dental material may slide down the inclined wall 17A (via gravity or a suitable device (e.g., dental spatula)) until it abuts the backwall 17B. Once abutting the backwall 17B, the dental material may be easily removed using a suitable device (e.g., dental spatula). Further regarding the inclined wall 17A, to facilitate removal of the dental material, in some embodiments, the inclined wall 17A may be configured such that an angle α defined by the intersection of the plane of the inclined wall 17A and a plane that is generally parallel to the plane of the top wall 9 may be at least 10 degrees, at least 20 degrees, at least 40 degrees, at least 50 degrees, at least 60 degrees, or at least 70 degrees; and an angle β defined by the intersection of the plane of the inclined wall 17A and the backwall 17B may be between 50 and 160 degrees, between, 70 and 140degrees, or between 90 and 120 degrees.

In some embodiments, the warming device 1 may be sized to facilitate rapid warming of a small amount of dental material (e.g., an amount of dental material that is sufficient to carry out a single (or other small number) of dental filling procedures (typically about 0.3 grams of dental material)). In this regard, the inclined wall 17A may be sized such that it has a longest dimension of no more than 50 mm, no more than 40 mm, or no more than 25 mm; or has a total area of no more than 10000 mm², no more than 800 mm², or no more than 600 mm².

According to the invention, the warming device further includes a shield 19 that is sized and shaped to cover (or substantially cover) the warming cavity 15. Generally, the shield may be configured to protect an amount of dental material that has been deposited in the warming cavity 15 from ambient light (and thus prevent or mitigate premature polymerization of the dental material). In this regard and according to the invention, the shield 19 is formed from a material that blocks (or at least substantially blocks) visible blue light (an orange filter).

According to the invention, the shield 19 is movably disposed on the housing 3 from an open position in which a dental material can be placed into or removed from the warming cavity 15 to a closed position in which the shield 19 protects the warming cavity 15 from ambient light (and may prevent placement or removal of the dental material). As shown, the glare shield 19 may be slidably arranged and guided on the housing via a pair of tracks 21 extending from opposite sides of the top wall 9. Alternatively, any suitable arrangement for coupling the glare shield to the housing 3 which allows for movement between the above-discussed open and closed positions may be employed (e.g., a hinge).

According to the invention, the warming device 1 includes an actuator 23 for activating a heating operation of the warming device 1. The heating operation may cause the warming device 1 to provide thermal energy into the cavity (so that dental material, when positioned within the warming cavity 15 is heated).

In some embodiments, the warming device 1 may include a heat generating component that is disposed in thermal communication with the warming cavity 15. For example, as shown in FIGS. 1-4, the heat generating component may include a heating foil 25 that is disposed within the internal cavity 13 such that is in thermal communication with the warming cavity 15.

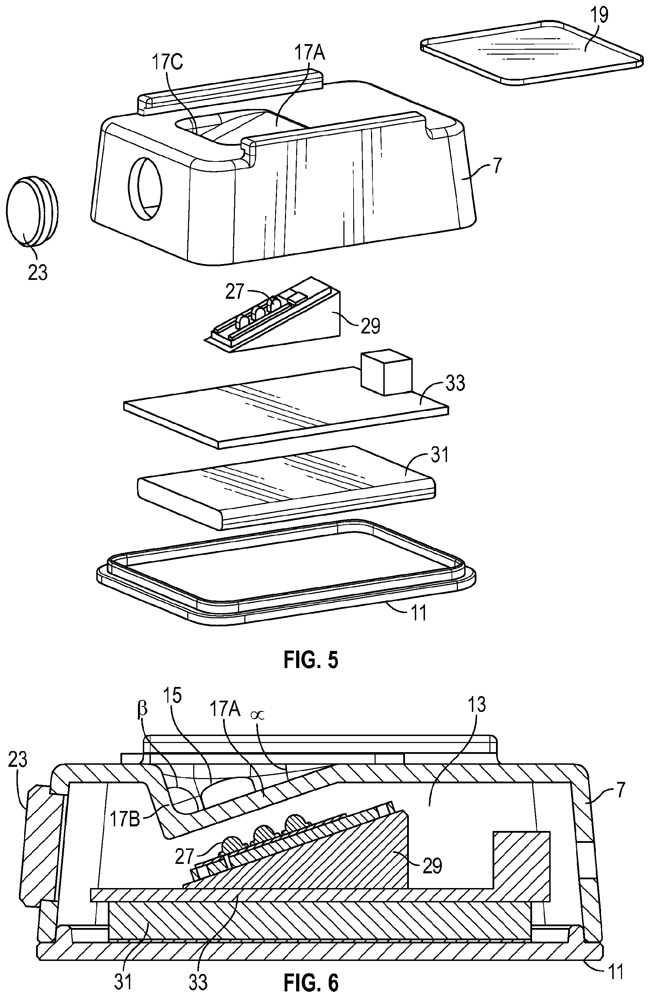

Referring now to FIGS. 5-6, in some embodiments, the heat generating component may (alternatively or additionally) include one or more light emitting diodes (LEDs) 27 coupled to a heat sink 29, which are in thermal communication with the warming cavity 15. The LEDs 27 may be configured for emitting infrared light, in particular light at a peek wavelength of about 940 nm. The light power of the infrared light may be at least 5 W or at least 0.5 W. While the LEDs 27 are depicted as being positioned below the inclined ramp 17A, it is to be appreciated that the LEDs 27 may be disposed at any position within the warming device 1 in which they are in thermal communication with the warming cavity 15. In some embodiments, the heat sink 29 may be thermally coupled to each of the LEDs 27. In some embodiments, the LEDs 27 may be mounted on an electric circuit board.

In some embodiments, the warming device 1 may include a rechargeable battery 31 (e.g., a Li-ion battery) for powering the electronic components of the warming device. In this manner, the warming device 1 can be operated as a wireless device. Further, the device may be connectable to an external power source for recharging the battery 31. Alternatively, the warming device 1 may be powered by an electrical cord that is connectable to a power supply.

In some embodiments, the warming device 1 may further include control circuitry 33 (e.g., a printed circuit board) that is adapted to send and receive signals from components of the warming device (e.g., actuators, heat generators, temperature sensors, and the like). For example, the control circuity 33 may be adapted to initiate a heating operation following receipt of a signal from the actuator and to interrupt the heating operation sometime thereafter. For example, the heating operation may be interrupted upon receiving a signal from one or more temperature sensors which is indicative of a temperature that exceeds a predetermined value (e.g., 60°C or 65 °C). Alternatively, or additionally, the heating operation may be interrupted after a predetermined time period (e.g., between 5 and 30 seconds or between 8 and 20 seconds). It is to be understood that unless a heating operation is initiated, the warming device 1 does not provide thermal energy to warming cavity 15. That is, the warming device 1 may only heat on demand for a relatively short or predetermined time period, and thus facilitate minimization of energy consumption.

In some embodiments, the warming device 1 may further include an indicator light. The indicator light may be activated for the time the heating operation is activated and the indicator light may be otherwise deactivated otherwise. In this manner, a user of the warming device can recognize whether or not the heating operation of the heating device is in process and when it is concluded.

In some embodiments, use of the warming device 1 of the present disclosure may be carried out as follows. If not already in the open position, the shield 19 may be moved by the user (e.g., dental practitioner) from the closed position to the open position. The user may then deposit an amount of a dental material onto the inclined wall 17A. The dental material may be deposited directly from the dental material packaging (e.g., syringe or capsule) or via a suitable device (e.g., dental spatula). The dental material may be deposited at room temperature. Following deposition of the dental material, the shield 19 may be moved from the open position to the closed position. The user may then activate a warming operation by manipulating the actuator 23. After a predetermined time or once a predetermined temperature is sensed with the warming cavity is achieved, the warming operation may conclude. Following the warming operation, the shield 19 may be moved from the closed position to the open position. The user may then remove the warmed dental material from the warming cavity 15 using a suitable device (e.g., a dental spatula) in an optimal handling state for inserting into the patient's tooth. It should be understood that this disclosure is not intended to be unduly limited by the illustrative embodiments set forth herein and that such embodiments are presented by way of example only with the scope of the disclosure intended to be limited only by the claims set forth herein as follows.

## Claims

1. A warming device (1) for a dental material, the warming device comprising:
a housing (3) comprising a top wall (9);
a warming cavity (15) defined by an inclined wall (17A), a backwall (17B) and one or more sidewall (17C) formed within the top wall;
a heat generating component arranged such that it is in thermal communication with the warming cavity; and
a shield (19) movable between a first position in which a dental material can be deposited into the warming cavity and a second position in which the shield at least partially covers the warming cavity, wherein the shield is formed of a material that at least substantially blocks transmission of visible blue light through the shield;
the warming device **characterized in that** the shield comprises an orange filter.

2. The warming device of claim 1, wherein an angle α defined by an intersection of the plane of the inclined wall and a plane that is generally parallel to the plane of the top wall is at least 10 degrees.

3. The warming device of any one of claims 1 or 2, wherein an angle β defined by an intersection of the plane of the inclined wall and the plane of the backwall is between 50 and 160 degrees.

4. The warming device of any one of claims 1-3, wherein the inclined wall has a longest dimension of no more than 50 mm and an area of no more than 1000 mm².

5. The warming device of any one of claims 1-4, wherein the heat generating component comprises a heating foil (25).

6. The warming device of any one of claims 1-5, wherein the heat generating component comprises one or more light emitting diodes (27) situated such that they are in thermal communication with the warming cavity, wherein the LEDs are configured for emitting light within a wavelength range of 780 nm to 1400 nm.

7. The warming device of any one of claims 1-6, further comprising control circuity (33) operatively coupled to one or more electrical components of the warming device such that the control circuitry can send and receive signals from electrical components of the warming device, wherein the control circuity is adapted to initiate a heating operation following receipt of a signal from an actuator, and to interrupt the heating operation after a predetermined time period or after a predetermined temperature is achieved within the warming cavity.

8. The warming device of any one of claims 1-7, further comprising a rechargeable battery (31) for powering at least the heat generating component.

9. A system, comprising the warming device of any of the preceding claims and a quantity of dental material borne on a surface of the inclined wall.

## Patentansprüche

1. Eine Erwärmungsvorrichtung (1) für ein Dentalmaterial, die Erwärmungsvorrichtung aufweisend:
ein Gehäuse (3), aufweisend eine obere Wand (9);
einen Erwärmungshohlraum (15), der durch eine geneigte Wand (17A), eine Rückwand (17B) und eine oder mehrere Seitenwände (17C) definiert ist, die innerhalb der oberen Wand ausgebildet sind;
eine wärmeerzeugende Komponente, die derart angeordnet ist, dass sie in thermischer Verbindung mit dem Erwärmungshohlraum steht; und
eine Abschirmung (19), die zwischen einer ersten Position, in der ein Dentalmaterial in die Erwärmungskammer eingebracht werden kann, und einer zweiten Position, in der die Abschirmung die Erwärmungskammer mindestens teilweise abdeckt, bewegbar ist, wobei die Abschirmung aus einem Material ausgebildet ist, das eine Durchstrahlung von sichtbarem blauem Licht durch die Abschirmung mindestens im Wesentlichen blockiert;
wobei die Erwärmungsvorrichtung **dadurch gekennzeichnet ist, dass** die Abschirmung einen orangefarbenen Filter aufweist.

2. Die Erwärmungsvorrichtung nach Anspruch 1, wobei ein Winkel α, der durch einen Schnitt der Ebene der geneigten Wand und einer Ebene, die im Allgemeinen parallel zu der Ebene der oberen Wand ist, definiert wird, mindestens 10 Grad beträgt.

3. Die Erwärmungsvorrichtung nach einem der Ansprüche 1 oder 2, wobei ein Winkel β, der durch einen Schnitt der Ebene der geneigten Wand und der Ebene der Rückwand definiert wird, zwischen 50 und 160 Grad liegt.

4. Die Erwärmungsvorrichtung nach einem der Ansprüche 1 bis 3, wobei die geneigte Wand eine längste Abmessung von nicht mehr als 50 mm und eine Fläche von nicht mehr als 1000 mm² hat.

5. Die Erwärmungsvorrichtung nach einem der Ansprüche 1 bis 4, wobei die wärmeerzeugende Komponente eine Heizfolie (25) aufweist.

6. Die Erwärmungsvorrichtung nach einem der Ansprüche 1 bis 5, wobei die wärmeerzeugende Komponente eine oder mehrere Leuchtdioden (27) aufweist, die derart angeordnet sind, dass sie in thermischer Verbindung mit dem Erwärmungshohlraum stehen, wobei die LEDs zum Emittieren von Licht innerhalb eines Wellenlängenbereichs von 780 nm bis 1400 nm konfiguriert sind.

7. Die Erwärmungsvorrichtung nach einem der Ansprüche 1 bis 6, ferner aufweisend eine Steuerschaltung (33), die mit einer oder mehreren elektrischen Komponenten der Erwärmungsvorrichtung derart wirkgekoppelt ist, dass die Steuerschaltung Signale von elektrischen Komponenten der Erwärmungsvorrichtung senden und empfangen kann, wobei die Steuerschaltung angepasst ist, um nach einem Empfang eines Signals von einem Aktuator einen wärmeerzeugenden Vorgang einzuleiten und um den wärmeerzeugenden Vorgang nach einer vorbestimmten Zeitspanne oder nachdem innerhalb des Erwärmungshohlraums eine vorbestimmte Temperatur erreicht ist, zu unterbrechen.

8. Die Erwärmungsvorrichtung nach einem der Ansprüche 1 bis 7, ferner aufweisend eine wiederaufladbare Batterie (31) zum Versorgen mindestens der wärmeerzeugenden Komponente mit Strom.

9. Ein System, aufweisend die Erwärmungsvorrichtung nach einem der vorstehenden Ansprüche und eine Menge an Dentalmaterial, das auf einer Oberfläche der geneigten Wand getragen wird.

## Revendications

1. Dispositif de réchauffement (1) pour un matériau dentaire, le dispositif de réchauffement comprenant :
un boîtier (3) comprenant une paroi supérieure (9) ;
une cavité de réchauffement (15) définie par une paroi inclinée (17A), une paroi arrière (17B) et une ou plusieurs parois latérales (17C) formées à l'intérieur de la paroi supérieure ;
un composant générateur de chaleur disposé de manière à être en communication thermique avec la cavité de réchauffement ; et
un blindage (19) mobile entre une première position dans laquelle un matériau dentaire peut être déposé dans la cavité de réchauffement et une seconde position dans laquelle le blindage recouvre au moins partiellement la cavité de réchauffement, dans lequel le blindage est formé d'un matériau qui bloque au moins en grande partie la transmission de lumière bleue visible à travers le blindage ;
le dispositif de réchauffement **caractérisé en ce que** le blindage comprend un filtre orange.

2. Dispositif de réchauffement selon la revendication 1, dans lequel un angle α défini par une intersection du plan de la paroi inclinée et d'un plan généralement parallèle au plan de la paroi supérieure est d'au moins 10 degrés.

3. Dispositif de réchauffement selon l'une quelconque des revendications 1 ou 2, dans lequel un angle β défini par une intersection du plan de la paroi inclinée et du plan de la paroi arrière est compris entre 50 et 160 degrés.

4. Dispositif de réchauffement selon l'une quelconque des revendications 1 à 3, dans lequel la paroi inclinée a une dimension maximale de 50 mm et une surface maximale de 1 000 mm².

5. Dispositif de réchauffement selon l'une quelconque des revendications 1 à 4, dans lequel le composant générateur de chaleur comprend un film chauffant (25).

6. Dispositif de réchauffement selon l'une quelconque des revendications 1 à 5, dans lequel le composant générateur de chaleur comprend une ou plusieurs diodes électroluminescentes (27) situées de manière à être en communication thermique avec la cavité de réchauffement, dans lequel les DEL sont configurées pour émettre de la lumière dans une gamme de longueurs d'onde comprise entre 780 nm et 1 400 nm.

7. Dispositif de réchauffement selon l'une quelconque des revendications 1 à 6, comprenant en outre une circuiterie de commande (33) couplée de manière opérationnelle à un ou plusieurs composants électriques du dispositif de réchauffement, de sorte que la circuiterie de commande peut envoyer et recevoir des signaux des composants électriques du dispositif de réchauffement, dans lequel la circuiterie de commande est adaptée pour lancer une opération de chauffage après réception d'un signal d'un actionneur, et pour interrompre l'opération de chauffage après une période de temps prédéterminée ou après qu'une température prédéterminée est atteinte dans la cavité de réchauffement.

8. Dispositif de réchauffement selon l'une quelconque des revendications 1 à 7, comprenant en outre une batterie rechargeable (31) pour alimenter au moins le composant générateur de chaleur.

9. Système comprenant le dispositif de réchauffement selon l'une quelconque des revendications précédentes et une quantité de matériau dentaire porté sur une surface de la paroi inclinée.
